# EUROPÄISCHE PATENTANMELDUNG

(11) **EP 3 756 866 A1**
(43) Veröffentlichungstag der Anmeldung: **30.12.2020**
(21) Anmeldenummer: 19182557.9
(22) Anmeldetag: 26.06.2019
(51) Int. Cl.: B29C 70/08, B29C 70/12, B29C 70/16, B29C 70/20, B29C 70/22, B29C 70/50, B29C 70/68, B32B 5/02, B32B 5/12, B32B 5/26, B32B 27/12, B32B 27/18, B32B 27/32

(54) **FASERVERSTÄRKTER, THERMOPLASTISCHER VERBUNDWERKSTOFF, VERFAHREN ZUR HERSTELLUNG EINES VERBUNDWERKSTOFFS UND ENTSPRECHENDE VERWENDUNGEN**

(71) Anmelder: Optiplan GmbH, 08606 Oelsnitz (DE)
(72) Erfinder: Förster, Norbert, 95138 Bad Steben (DE)
(74) Vertreter: Kuhnen & Wacker Patent- und Rechtsanwaltsbüro PartG mbB

(57) **Zusammenfassung**

Beansprucht wird ein faserverstärkter, thermoplastischer Verbundwerkstoff, wobei der Verbundwerkstoff eine erste Thermoplastschicht aufweist, welche einen ersten, glasfaserverstärkten Thermoplasten enthält oder daraus besteht. Dabei weist der erste Thermoplast Glasfasern in einem Massenanteil zwischen 5 und 60 % auf. Wenigstens 60 Massen-% der Glasfasern des ersten, glasfaserverstärkten Thermoplasten weisen eine Länge von 8 bis 10 mm auf. Der erste Thermoplast weist einen Schmelzflussindex bzw. die Schmelze-Volumenfließrate zwischen 2 und 10 g/min, gemessen bei 230 °C und 2,16 kg gemäß DIN 53735 bzw. ISO 1133, auf.

## Beschreibung

### Technisches Gebiet

Die vorliegende Erfindung betrifft einen faserverstärkten, thermoplastischen Verbundwerkstoff nach Anspruch 1, ein Verfahren zur Herstellung eines Verbundwerkstoffs nach Anspruch 14 und die Verwendung nach den Ansprüchen 18 und 19.

### Stand der Technik

Bauteile, welche aus faserverstärkten thermoplastischen Verbundwerkstoffen bestehen oder diese als Decklagen enthalten, finden zunehmend Anwendungen bei den Freizeit- und Nutzfahrzeugen, im Bereich der Elektromobilität, im Transportsektor (z.B. Transportbehälter) sowie in der Bau-, Möbel- und Maritimindustrie.

Hierzu sind aus dem Stand der Technik duroplastische Flachbahnen bzw. Deckschichten auf Basis von glasfaserverstärkten reaktiven Harzen (ungesättigte Polyesterharze (UP-Harze), Epoxidharze, Polyurethane (PU)) bekannt. Insbesondere werden faserverstärkte thermoplastische Verbundwerkstoffe durch Schmelzeimprägnierung unterschiedlicher Lagen von Glasfasermatten/-gelegen mit Thermoplastbahnen, vorwiegend im GMT-Verfahren (glasmattenverstärkte Thermoplaste) auf Doppelbandpressen hergestellt. Alternativ lassen sich Glasrovings (Glasfäden) in eine Polymermatrix mittels der bekannten UD-Tape-Technologie einbetten.

Dabei ist von Nachteil, dass bei den bekannten Verfahren regelmäßig unebene, streifige und/oder raue Oberflächen entstehen, welche insbesondere bei der Ausbildung von Sichtflächen stören. Verschiedene Ansätze zur Überwindung dieses Problems, wie beispielsweise Nachbearbeiten der Oberfläche durch Spachteln, Fräsen, Polieren und Lackieren, eine Vliesbeschichtung der Ober- und/oder Unterseite der hergestellten Halbzeuge, oder das Verpressen von Glasmatten mit den Thermoplast-Schmelzebahnen, waren zur Überwindung des vorstehend genannten Problems nicht ausreichend und konnten zudem für die mechanischen Eigenschaften der Verbundwerkstoffe, insbesondere betreffend die Festigkeit und Steifigkeit des Verbundwerkstoffs, aber auch eine geringe Wärmeausdehnung, nachteilig sein.

### Aufgabe der vorliegenden Erfindung

Es ist daher eine Aufgabe der vorliegenden Erfindung, wenigstens eine der vorgenannten Nachteile aus dem Stand der Technik zu überwinden. Insbesondere ist es eine Aufgabe der vorliegenden Erfindung, einen faserverstärkten, thermoplastischen Verbundwerkstoff und/oder ein Verfahren zur Herstellung eines faserverstärkten, thermoplastischen Verbundwerkstoffs bereitzustellen, welcher eine verbesserte Oberflächengestalt, insbesondere eine glatte Oberfläche, aufweist.

### Zusammenfassung der vorliegenden Erfindung

Die vorstehend definierte Aufgabe wird durch den faserverstärkten, thermoplastischen Verbundwerkstoff gemäß Anspruch 1 gelöst.

Gemäß einem ersten Aspekt der Erfindung wird ein faserverstärkter, thermoplastischer Verbundwerkstoff beansprucht, wobei der Verbundwerkstoff eine erste Thermoplastschicht aufweist, welche einen ersten, glasfaserverstärkten Thermoplasten enthält oder daraus besteht. Dabei weist der erste Thermoplast Glasfasern in einem Massenanteil zwischen 5 und 60 %, vorzugsweise zwischen 20 und 40 %, auf (wobei die Summe aus der Masse des Polymers oder der Polymere im ersten Thermoplasten und der Masse der Glasfasern im ersten Thermoplasten 100 % entspricht). Wenigstens 60 Massen-%, vorzugsweise wenigstens 80 Massen-%, der Glasfasern des ersten, glasfaserverstärkten Thermoplasten weisen eine Länge von 8 bis 10 mm auf. Der erste Thermoplast weist einen Schmelzflussindex bzw. die Schmelze-Volumenfließrate zwischen 2 und 10 g/min, gemessen bei 230 °C und 2,16 kg gemäß DIN 53735 bzw. ISO 1133, auf. Die geringe Viskosität des ersten Thermoplasten führt zu einer guten Schmelzeimprägnierung und bringt optimale Konsolidierungsergebnisse im erfindungsgemäßen Verbundwerkstoff. Insbesondere erlaubt der vorgegebene Bereich des Schmelzflussindexes eine gute Verarbeitbarkeit und eine hinreichende Dispergierbarkeit der Glasfasern. Bei einem Schmelzflussindex von mehr als 10 g/min treten aufgrund der geringen Viskosität vermehrt Verarbeitungsschwierigkeiten während des Glättschritts auf (z.B. Ausfließen der Thermoplastschmelze aus einem Kalander o.ä. während der Verarbeitung). Umgekehrt tritt bei einem Schmelzflussindex von weniger als 2 g/min eine verschlechterte gegenseitige Durchdringung von Glasfasern und Thermoplast auf. Weist der Schmelzflussindex des ersten Thermoplasten einen Wert außerhalb des erfindungsgemäßen Bereichs zwischen 2 und 10 g/min auf, können zudem bei Vorsehen eines Laminierschrittes Probleme bei der Verarbeitung, insbesondere eine unzureichende Haftung und sogar eine Delaminierung einzelner oder mehrerer Schichten, auftreten. Die Erfindung konzentriert sich auf das Vorsehen von Thermoplasten als Polymere für die Matrix, während erfindungsgemäß Duroplaste nicht als Polymere für die Matrix vorgesehen sind.

Der erfindungsgemäße Verbundwerkstoff wird vorzugsweise durch ein Verfahren hergestellt wird, welches wenigstens die nachfolgenden Schritte umfasst: (a) Extrudieren des ersten Thermoplasten, vorzugsweise mittels einer Breitschlitzdüse, wodurch die erste Thermoplastschicht erhalten wird; und (b) Glätten der ersten Thermoplastschicht, vorzugsweise mittels eines Glättwerks.

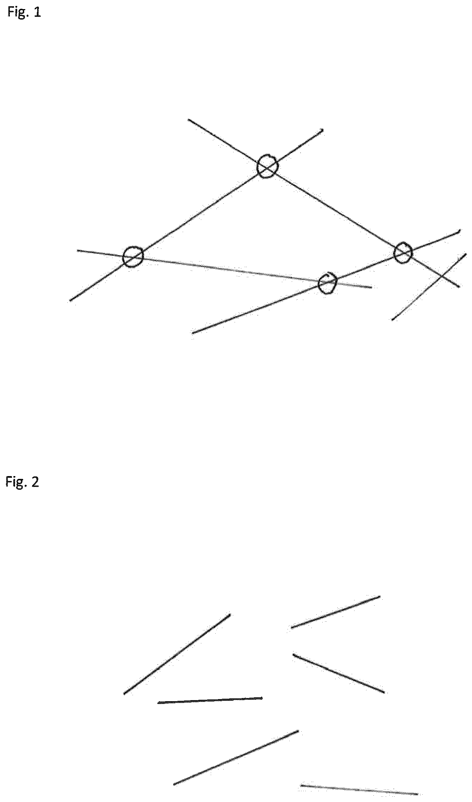

Die Erfinder der vorliegenden Erfindung haben erkannt, dass die mechanischen Eigenschaften der angestrebten Verbundwerkstoffe nur dann sichergestellt werden können, wenn das Fasermaterial und die Polymermatrix geeignet zusammenwirken. So wird beim erfindungsgemäßen Verbundwerkstoff sichergestellt, dass die in die Matrix eingebetteten Fasern bzw. Faserbündel, sich überschneiden bzw. überlagern bzw. überdecken, also sich einander berühren. Ein Beispiel für die Faserstruktur eines erfindungsgemäßen Faserverbundwerkstoffs ist in Fig. 1 schematisch dargestellt. Darin ist zu erkennen, dass die meisten der Glasfasern ausreichend lang sind, um an ein oder zwei Stellen eine andere Faser zu berühren. In der Figur sind die Schnittpunkte (Orte der Überschneidung bzw. Überlagerung bzw. Überdeckung) durch Kreise markiert. Eine derartige Überschneidung erfordert einerseits eine ausreichende Faserlänge. Andererseits ist eine ausreichend gleichmäßige Verteilung bzw. Dispergierung der Fasern innerhalb der Polymermatrix erforderlich. Dabei bewirkt die Einbettung der Fasern in das als Matrix fungierende Polymer, dass die Fasern bzw. Faserbündel dauerhaft miteinander verbunden sind bzw. sich berühren. Die Verbindung bzw. Berührung der Fasern untereinander ermöglicht es, dass die Fasern bei Krafteinwirkung (Zug, Biegung, Dynamik) die Kraft übertragen können.

Ist dagegen die Länge der Glasfasern bzw. der Glasfaserbündel zu gering oder ist die Verteilung der Glasfasern nicht hinreichend homogen, kommt es zu keiner Überschneidung bzw. Überlagerung der Fasern und die erfindungsgemäß beschriebenen Wirkungen treten nicht ein. Ein Beispiel für eine Faserstruktur mit kurzen Glasfasern bzw. Glasfaserbündeln, welche nicht dem erfindungsgemäßen Faserverbundwerkstoffs entsprechen, ist in Fig. 2 schematisch dargestellt. Wie in Fig. 2 erkennbar, fehlt es bei dieser Struktur an einer Überschneidung bzw. Überlagerung der Fasern bzw. Faserbündeln.

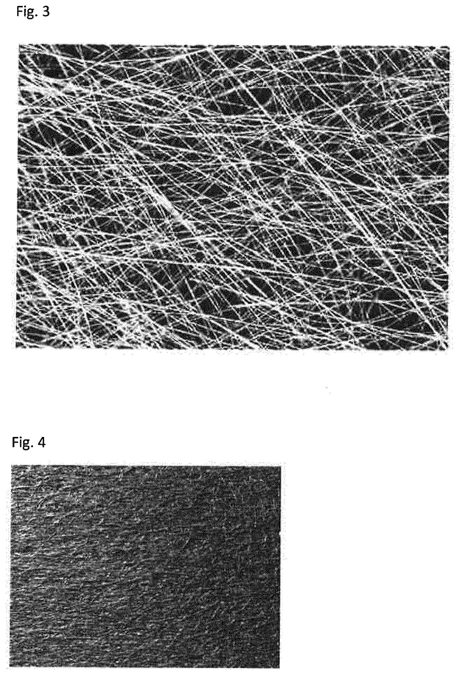

Erfindungsgemäß wird der Vorteil der Überschneidung durch die Verwendung eines Polymers erreicht, das mit langen Glasfasern bzw. Langfasern) verstärkt worden ist (langglasfaserverstärktes Polymer). Zur Faserverstärkung können beispielsweise sogenannte Chopped-Strand-Mats bzw. Schnittmatten verwendet werden (vgl. Fig. 3). Dabei weisen wenigstens 60 Massen-%, vorzugsweise wenigstens 80 Massen-%, der Glasfasern im fertigen Verbundwerkstoff eine Länge von 8 bis 10 mm auf. Wenn die Faserlänge erheblich kürzer wäre, hätte dies den Nachteil, dass die Überschneidung bzw. Überlagerung der Fasern bzw. Faserbündel geringer ist und die Kraftübertragung entsprechend verringert ist. Hierdurch wären die mechanischen Eigenschaften beeinträchtigt. Umgekehrt ist die Überschneidung bzw. Überlagerung der Glasfasern umso besser, je länger die Fasern sind. Die erfindungsgemäß vorgesehene Länge der Glasfasern von 8 bis 10 mm weist ferner den Vorteil auf, dass sich mit Glasfasern von dieser Länge noch eine gute Dispersion der Phasen in der Polymermatrix erzielen lässt. Fasern, welche länger als 10 mm sind, erschweren das Herstellen einer homogen Verteilung bzw. gleichmäßigen Dispergierung der Fasern in der Polymermatrix.

Als besonders vorteilhaft hat sich herausgestellt, wenn der erfindungsgemäße Verbundwerkstoff durch Extrudieren eines ersten Thermoplasten hergestellt wird, wodurch eine erste Thermoplastschicht erhalten wird, welche anschließend vorzugsweise mittels eines Glättwerks geglättet werden kann. Damit wird erstmals ein glasfaserverstärkter Thermoplast für eine Flachbahn-Extrusion verwendet. Im Stand der Technik werden glasfaserverstärkte Thermoplaste allenfalls im Spritzguss zur Teilefertigung eingesetzt. Besonders vorteilhaft ist, wenn dabei die Glättwerkzeuge eine Temperatur zwischen 30 und 110 °C aufweisen. Hierdurch wird eine optimale Eindringtiefe der Glasfaserbündel in die Polymermatrix erzielt.

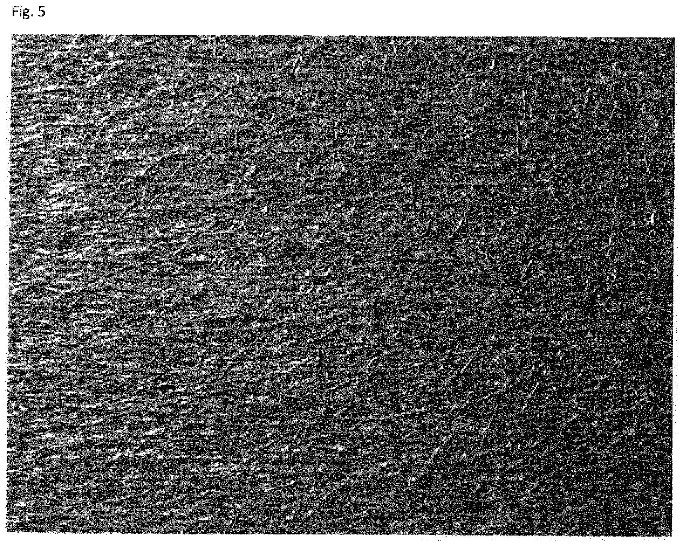

Wenn bei der Herstellung des erfindungsgemäßen Verbundwerkstoffs diese Verfahrensschritte durchgeführt werden, gelingt es, eine besonders vorteilhafte Ausrichtung der Fasern bzw. Faserbündel in der Polymermatrix zu erzielen. Durch das Extrudieren neigen die Faserbündel zunächst zu einer im Wesentlichen parallelen oder eher parallelen Ausrichtung in der Matrix. Dies bedeutet, dass die Fasern aufgrund der Extrusion überwiegend längsorientiert, d.h. in der Maschinenrichtung orientiert, sind. Durch den anschließenden Schritt des Glättens werden dagegen eine zufällige räumliche, "wirre" Ausrichtung der Faserbündel und eine gleichmäßige Dispergierung derselben in der Polymermatrix erzielt. Eine beispielhafte mikroskopische Darstellung der gleichmäßigen Verteilung und zufälligen Ausrichtung der Fasern im erfindungsgemäßen Verbundwerkstoff ist in Fig. 4 dargestellt. Fig. 5 zeigt beispielhaft einen Ausschnitt aus einer Fasermatrix eines erfindungsgemäßen Verbundwerkstoffs: darin wurde das Polymer zur Sichtbarmachung der reinen Fasermatrix in Muffelofen verglüht. Bei dieser Darstellung der Fasermatrix ist besonders gut die homogene Verteilung und gleichmäßige Ausrichtung der Fasern im Raum bzw. in der Fläche (ohne Richtungsbevorzugung) zu erkennen. Darüber hinaus sind eine Vielzahl von Überschneidungs- bzw. Uberdeckungspunkten der einzelnen Faserbündel erkennbar.

Die Erfinder vermuten, dass bei einer Verwendung beispielsweise einer Glättwerkstechnik, eine intensive Durchmischung bzw. "Verwirrung" der Faserbündel in der noch plastischen Polymermatrix, welche hierbei als rollierender Wulst vorliegt, stattfindet. Hierdurch wird im Wesentlichen eine räumliche Gleichverteilung der Faserorientierung erzielt, wodurch die Festigkeit des resultierenden Verbundwerkstoffs vorteilhaft verbessert wird. Zusätzlich bewirkt das Glätten ein "Glattstreichen" der Oberfläche der faserverstärkten Polymermatrix. Hieraus resultiert letztlich eine vergleichsweise glatte erste Thermoplastschicht, in der die Faserbündel in Bezug auf ihre räumliche Ausrichtung quasi zufällig und wirr angeordnet sind.

Da die Glasfaserbündel beim erfindungsgemäßen Verbundwerkstoff in die Polymermatrix eingebunden sind, wird eine hohe Steifigkeit des resultierenden Verbundwerkstoffs selbst bei hohen Temperaturen von etwa 100 °C erzielt.

Erfindungsgemäß ist wesentlich, dass die Glasfasern am ersten Thermoplasten (matrixbildendes Polymer einschließlich der Glasfasern) einen Massenanteil zwischen 5 und 60 %, vorzugsweise zwischen 20 und 40 %, insbesondere zwischen 30 und 40 %, aufweisen. Beträgt der Massenanteil der Glasfasern weniger als 20 %, insbesondere weniger als 5 %, ist die Wahrscheinlichkeit einer Überschneidung/Überlagerung/Überdeckung der Glasfaserbündel zu gering, um die gewünschten mechanischen Eigenschaften sicherzustellen. Ist dagegen der Massenanteil der Glasfasern mehr als 40 %, insbesondere mehr als 60 %, so ist die Wirkung der Polymermatrix als verbindendes Trägerelement möglicherweise nicht mehr sichergestellt. Entgegen der aus dem Stand der Technik bekannten Annahme, den Glasanteil am Thermoplasten möglichst hoch, insbesondere mehr als 60 %, zu wählen, darf der Massenanteil der Glasfasern am Thermoplasten 60 %, vorzugsweise 40 %, nicht überschreiten. Bei sehr hohen Gehalten an Glasfasern von mehr als 60 % kann nämlich eine hinreichende Verbindung zwischen der Polymermatrix und den Glasfasern nicht mehr sichergestellt werden, sodass die Imprägnierung der Glasfasern mit der Polymermatrix nicht mehr hinreichend ist. Dies führt wiederum zu einer Verschlechterung der mechanischen Eigenschaften.

Besonders vorteilhaft ist es, wenn die Glasfasern bei der Herstellung des erfindungsgemäßen Verbundwerkstoffs schonend gefördert werden. Dies kann beispielsweise durch den Einsatz geeigneter Extrusionsschnecken erzielt werden. Beispielsweise durch den Einsatz dieser Technik gelingt es, die Langglasfaserstruktur mit einer Ausgangslänge von 8 bis 10 mm während der Verarbeitung weitgehend bzw. überwiegend zu erhalten. Erfindungsgemäß weisen noch wenigstens 60 Massen-%, vorzugsweise wenigstens 80 Massen-%, der Glasfasern des ersten Thermoplasten eine Länge von 8 bis 10 mm auf. Indem ein großer Anteil der Glasfasern eine Länge im angegebenen Bereich aufweist, welche auch als Langfasern bekannt sind, wird eine hohe mechanische Stabilität erzielt.

Aufgrund der gleichmäßig verteilten Glasfasern in der Polymermatrix wird ein homogenes Eigenschaftsbild sowohl in Bezug auf die mechanischen Eigenschaften als auch auf eine gleichmäßige, ebenmäßige Oberfläche sichergestellt.

Die erfindungsgemäße Aufgabe wird ferner durch den faserverstärkten, thermoplastischen Verbundwerkstoff gemäß Anspruch 2 gelöst.

Gemäß einem zweiten Aspekt der vorliegenden Erfindung wird ein faserverstärkter, thermoplastischer Verbundwerkstoff beansprucht, welcher eine Glasgittergelege-Schicht aufweist, welche ein Glasgittergelege enthält oder daraus besteht. Dabei weist der Verbundwerkstoff ferner eine erste Thermoplastschicht auf, welche einen ersten glasfaserverstärkten Thermoplasten enthält oder daraus besteht. Der erste Thermoplast weist Glasfasern in einem Massenanteil zwischen 5 und 60 %, vorzugsweise zwischen 20 und 40 %, auf. Dabei weisen wenigstens 60 Massen-%, vorzugsweise wenigstens 80 Massen-%, der Glasfasern des ersten Thermoplasten eine Länge von 8 bis 10 mm auf. Der erste Thermoplast weist einen Schmelzflussindex zwischen 2 und 10 g/min, gemessen bei 230 °C und 2,16 kg gemäß DIN 53735, auf.

Der Verbundwerkstoff weist die nachfolgende Schichtenfolge auf:
- die erste Thermoplastschicht; und
- die Glasgittergelege-Schicht.

Dabei wird der Verbundwerkstoff vorzugsweise durch ein Verfahren hergestellt, welches wenigstens die nachfolgenden Schritte umfasst:
(a) Extrudieren des ersten Thermoplasten, vorzugsweise mittels einer Breitschlitzdüse, wodurch die erste Thermoplastschicht erhalten wird;
(b) Aufbringen der ersten Thermoplastschicht auf die Glasgittergelege-Schicht; und
(c) Glätten des in Schritt (b) erhaltenen Verbundes, vorzugsweise mittels eines Glättwerks.

Der erfindungsgemäße Verbundwerkstoff gemäß dem zweiten Aspekt weist nicht nur die in Zusammenhang mit dem vorstehend beschriebenen, ersten Aspekt genannten Merkmale und Vorteile auf. Der Verbundwerkstoff gemäß dem zweiten Aspekt weist ferner ein Glasgittergelege auf, das eine noch gleichmäßigere bzw. homogenere Verteilung der Langglasfasern in der anliegenden Thermoplastschicht oder den anliegenden Thermoplastschichten bewirkt. Hierdurch wird die mechanische Festigkeit weiter verbessert. Ferner zeichnet sich der resultierende Verbundwerkstoff durch eine besonders geringe Wärmeausdehnung aus. Hierdurch kann während der Herstellung mittels Flachfolien-Extrusion und danach ein Schüsseln der resultierenden Thermoplastschicht bzw. des resultierenden Verbundwerkstoffs, insbesondere in deren bzw. dessen Randbereich, erfolgreich vermieden werden. Zudem wird aufgrund der geringen Wärmeausdehnung auch die Kältestabilität des Verbundwerkstoffs verbessert. Durch das Vorsehen des Glasgittergeleges kann zudem die Biegefestigkeit und Steifigkeit des erfindungsgemäßen Verbundwerkstoffs weiter verbessert werden. Des Weiteren wird durch das Vorsehen des Glasgittergelege eine partielle oder vollständige Delaminierung des Verbundwerkstoffs erfolgreich vermieden. Schließlich bewirkt der Einsatz des Glasgittergeleges eine Stabilisierung des Fertigungsprozesses und einen Ausgleich bzw. eine Verkleinerung der Fertigungstoleranzen. Das Glasgittergelege kann hinsichtlich der Fadendicke in Kette und Schuss variieren.

Die erfindungsgemäße Aufgabe wird ferner durch den faserverstärkten, thermoplastischen Verbundwerkstoff gemäß Anspruch 3 gelöst.

Gemäß einem dritten Aspekt der vorliegenden Erfindung wird ein faserverstärkter, thermoplastischer Verbundwerkstoff beansprucht, welcher eine Glasgittergelege-Schicht aufweist, welche ein Glasgittergelege enthält oder daraus besteht. Dabei weist der Verbundwerkstoff ferner eine erste Thermoplastschicht auf, welche einen ersten glasfaserverstärkten Thermoplasten enthält oder daraus besteht. Der Verbundwerkstoff weist ferner eine zweite Thermoplastschicht auf, welche einen zweiten glasfaserverstärkten Thermoplasten enthält oder daraus besteht. Der erste Thermoplast weist Glasfasern in einem Massenanteil zwischen 5 und 60 %, vorzugsweise zwischen 20 und 40 %, auf. Dabei weisen wenigstens 60 Massen-%, vorzugsweise wenigstens 80 Massen-%, der Glasfasern des ersten Thermoplasten eine Länge von 8 bis 10 mm auf. Der erste Thermoplast weist einen Schmelzflussindex zwischen 2 und 10 g/min, gemessen bei 230 °C und 2,16 kg gemäß DIN 53735, auf. Der zweite Thermoplast weist Glasfasern in einem Massenanteil zwischen 5 und 60 %, vorzugsweise zwischen 20 und 40 %, auf. Dabei weisen wenigstens 60 Massen-%, vorzugsweise wenigstens 80 Massen-%, der Glasfasern des zweiten Thermoplasten eine Länge von 8 bis 10 mm auf. Der zweite Thermoplast weist einen Schmelzflussindex zwischen 2 und 10 g/min, gemessen bei 230 °C und 2,16 kg gemäß DIN 53735, auf.

Der Verbundwerkstoff weist die nachfolgende Schichtenfolge auf:
- die erste Thermoplastschicht;
- die Glasgittergelege-Schicht; und
- die zweite Thermoplastschicht.

Dabei wird der Verbundwerkstoff vorzugsweise durch ein Verfahren hergestellt, welches wenigstens die nachfolgenden Schritte umfasst:
(a) Extrudieren des ersten Thermoplasten, vorzugsweise mittels einer Breitschlitzdüse, wodurch die erste Thermoplastschicht erhalten wird;
(b) Aufbringen der ersten Thermoplastschicht auf die Glasgittergelege-Schicht;
(c) Glätten des in Schritt (b) erhaltenen Verbundes, vorzugsweise mittels eines Glättwerks;
(d) Extrudieren des zweiten Thermoplasten, vorzugsweise mittels einer Breitschlitzdüse, wodurch die zweite Thermoplastschicht erhalten wird;
(e) Aufbringen der zweiten Thermoplastschicht auf die der ersten Thermoplastschicht gegenüberliegende Seite der Glasgittergelege-Schicht des in Schritt (c) erhaltenen Verbundes; und
(f) Glätten des in Schritt (e) erhaltenen Verbundes, vorzugsweise mittels eines Glättwerks.

Der erfindungsgemäße Verbundwerkstoff gemäß dem dritten Aspekt weist nicht nur die in Zusammenhang mit den vorstehend beschriebenen, ersten und zweiten Aspekten genannten Merkmale und Vorteile auf. Der Verbundwerkstoff gemäß dem dritten Aspekt weist ferner eine zweite Thermoplastschicht mit einem zweiten Thermoplasten auf, der einen Schmelzflussindex zwischen 2 und 10 g/min aufweist. Die zweite Thermoplastschicht erlaubt eine besonders gleichmäßige Auftragung einer außenliegenden Dekorschicht, d.h., eine Dekorschicht mit einer konstanten Dicken- und Oberflächenplanität.

Wird die zweite Thermoplastschicht auf der der ersten Thermoplastschicht gegenüberliegenden Seite der Glasgittergelege-Schicht aufgebracht, so wird mit der resultierenden Sandwichstruktur die Einbettung der Glasgittergelege-Schicht weiter verbessert. Hierdurch werden die mechanischen Eigenschaften des resultierenden Verbundwerkstoffs weiter verbessert. Insbesondere kann das Schüsseln weiter reduziert werden. Zudem wird die Neigung zur Delaminierung des Gesamtkonstrukts weiter reduziert.

Beim erfindungsgemäßen Verbundwerkstoff gemäß dem zweiten oder dritten Aspekt kann das Gittergelege einseitig oder beidseitig mit einem Glasvlies kaschiert sein, wobei eine einseitige Kaschierung zumeist ausreichend ist. Das Vorsehen eines Glasvlieses erhöht die Maß- und Formstabilität, mindert mögliche Verzugserscheinungen, Spannungen, Dehnungen und Rückschrumpf. Ferner wirkt es der Einwirkung von während der Herstellung ggf. anliegenden, ungleichmäßigen Zugkräften entgegen. Dabei kann das Glasvlies während der Herstellung des Verbundwerkstoffs ein Durchdringen der Thermoplastschicht in das Glasgittergelege sowie ein "Durchschlagen" oder "Durchtropfen" des Polymers auf das Glättwerk verhindern und so ein räumliches Fixieren der Thermoplastschichten unterstützen. Zum Verhindern des Durchschlagens des Polymers auf das Glättwerk ist eine einseitige Kaschierung mit einem Glasvlies meistens ausreichend.

Insbesondere kann durch das Vorsehen eines Glasgittergeleges vermieden werden, dass eine auf den Verbundwerkstoff einwirkende Zugkraft vollständig auf die Polymermatrix einwirkt. Vielmehr wird die Zugkraft wenigstens teilweise vom Glasgittergelege aufgenommen. Hierdurch kann die Zugfestigkeit des Verbundwerkstoffs und damit dessen Dimensionsstabilität weiter verbessert werden.

Vorteilhafte Ausführungsformen sind Gegenstand der abhängigen Ansprüche.

So kann der erste Thermoplast wenigstens ein Polymer enthalten oder aus einem Polymer bestehen oder aus einem Gemisch aus mehreren Polymeren bestehen. Dabei ist das Polymer ausgewählt aus einer Gruppe, welche besteht aus: einem Polyolefin, insbesondere Polyethylen oder Polypropylen, einem Polyamid, einem thermoplastischen Olefin, einem thermoplastischen Elastomer, einem Polycarbonat, einem Polyacryl, einem Copolymer derselben, einer Thermoplast-Abmischung, und einem reaktiven Polymer, vorzugsweise einem ungesättigten Polyesterharz, einem Epoxidharz oder einem Polyurethan.

Beim erfindungsgemäßen Verbundwerkstoff wird bevorzugt Polypropylen für den ersten Thermoplast verwendet, da dieser sehr gute Gebrauchs- und Verarbeitungseigenschaften, wie beispielsweise gute Anhaftungseigenschaften am Substrat/an anderen Bauteilen, aufweist, ist gut und preisgünstig verfügbar, hat eine günstige Ökobilanz, ist geruchsneutral, emissionsfrei und recycelbar und weist eine vergleichsweise geringe Masse bzw. Dichte auf. Zudem kann der erfindungsgemäße Verbundwerkstoff mit Polypropylen als erstem Thermoplasten mit anderen Polypropylen-haltigen Bauteilen thermisch verschweißt werden, ohne dass ein Verkleben erforderlich wäre.

Des Weiteren kann der zweite Thermoplast wenigstens ein Polymer enthalten oder aus einem Polymer bestehen oder aus einem Gemisch aus mehreren Polymeren bestehen, wobei das Polymer ausgewählt ist aus einer Gruppe, welche besteht aus: einem Polyolefin, insbesondere Polyethylen oder Polypropylen, einem Polyamid, einem thermoplastischen Olefin, einem thermoplastischen Elastomer, einem Polycarbonat, einem Polyacryl, einem Copolymer derselben, einer Thermoplast-Abmischung, und einem reaktiven Polymer, vorzugsweise einem ungesättigten Polyesterharz, einem Epoxidharz oder einem Polyurethan.

Beim erfindungsgemäßen Verbundwerkstoff wird bevorzugt Polypropylen für den zweiten Thermoplast verwendet, aus denselben Gründen wie vorstehend für den ersten Thermoplast erläutert.

Ferner kann die erste Thermoplastschicht mittels Extrusion mit dem Glasgittergelege verbunden worden sein. Dank der Extrusionstechnik wird eine innige Durchdringung von Thermoplast und Glasfasern erzielt. Darüber hinaus werden die Längen der Glasfasern während der Extrusion des Glasfaser-Thermoplast-Gemischs weitgehend erhalten oder nehmen nur geringfügig ab, insbesondere wenn bei der Extrusion zudem schonend arbeitende Plastifizierschnecken eingesetzt werden.

Zudem kann der Verbundwerkstoff einen Glasanteil von 15 bis 35 Massenprozent, vorzugsweise von 20 bis 30 Massenprozent, insbesondere 23 bis 27 Massenprozent, aufweisen. Die Erfinder haben festgestellt, dass Verbundwerkstoffe, welche einen von den angegebenen Bereichen abweichenden Glasanteil, insbesondere einen höheren Glasanteil, aufweisen, zu unebenen bzw. unruhigen Oberflächen des resultierende Verbundwerkstoffs führen. Zudem lassen sich derartige Verbundwerkstoffe nicht wirtschaftlich herstellen. Bei einem zu geringen Glasanteil ist, wie vorstehend dargestellt, die Vernetzung bzw. Berührung der einzelnen Glasfasern oder Glasfaserbündeln verringert, wodurch sich die beschriebenen mechanischen Eigenschaften verschlechtern.

In einer weiteren vorteilhaften Ausführungsform kann das Glasgittergelege ein Glas und einen dritten Thermoplasten aufweisen. Dabei kann der Glasanteil im Glasgittergelege vorzugsweise 50 bis 70 Massenprozent, insbesondere 55 bis 65 Massenprozent, betragen. Ferner kann der Anteil des dritten Thermoplasten im Glasgittergelege vorzugsweise 30 bis 50 Massenprozent, insbesondere 35 bis 45 Massenprozent, betragen. Der dritte Thermoplast kann wenigstens ein Polymer enthalten oder aus einem Polymer bestehen oder aus einem Gemisch aus mehreren Polymeren bestehen, wobei das Polymer ausgewählt ist aus einer Gruppe, welche besteht aus: einem Polyolefin, insbesondere Polyethylen oder Polypropylen, einem Polyamid, einem thermoplastischen Olefin, einem thermoplastischen Elastomer, einem Polycarbonat, einem Polyacryl, einem Copolymer derselben, einer Thermoplast-Abmischung, und einem reaktiven Polymer, vorzugsweise einem ungesättigten Polyesterharz, einem Epoxidharz oder einem Polyurethan. Vorzugsweise ist der dritte Thermoplast ein Polyolefin, insbesondere Polypropylen. Das Glasgittergelege kann ferner vorzugsweise Polyester, Naturmaterialien, Aramid, Kohlenstoff, Basalt, Carbon, höherschmelzende Polymere und/oder Hybridfasern aufweisen. Das Glasgittergelege kann vorzugsweise mit einem Haftungsvermittler imprägniert oder ummantelt sein.

Das Vorsehen des dritten Thermoplasten im Glasgittergelege verbessert nochmals die Gleichmäßigkeit bzw. Homogenität der Verteilung der Langglasfasern in der anliegenden Thermoplastschicht oder den anliegenden Thermoplastschichten. Darüber hinaus erleichtert der dritte Thermoplast die Anbindung bzw. Verankerung der anliegenden Thermoplastschicht(en) an die bzw. der Glasgittergelege-Schicht.

Das Glasgittergelege kann eine Gitterstruktur, vorzugsweise eine quadratische Gitterstruktur, aufweisen. Dabei können die Kantenlängen der Quadrate 1 bis 6 mm, vorzugsweise 2 bis 4 mm, insbesondere 2,5 bis 3,5 mm, betragen.

Ist die Kantenlänge der Quadrate zu groß, beispielsweise größer als 6 mm, ist der Bindungseffekt zwischen Glasgittergelege und Polymermatrix nicht ausreichend. Wenn andererseits die Kantenlänge der Quadrate zu klein ist, beispielsweise kleiner als 2 mm, dringt das Polymer nicht in ausreichenden Umfang in das Glasgittergelege ein oder durch das Glasgittergelege durch, so dass die Bindung zwischen Glasgittergelege und Polymermatrix nicht ausreichend ist. Besonders bevorzugt ist eine Kantenlänge von 3 (± 0,2) mm.

Das das Glasgittergelege aufbauende Garn kann imprägniert sein, muss jedoch nicht. Eine geeignete Imprägnierung kann jedoch vorteilhaft sein, um eine optimale Verbindung zwischen Glasgittergelege und Polymermatrix bzw. Thermoplastmaterial sicherzustellen.

Das Garn des Glasgittergeleges darf einen vorbestimmten Durchmesser nicht unterschreiten, um einen ausreichenden Beitrag des Glasgittergeleges zur mechanischen Stabilität sicherzustellen. Andererseits darf das Garn des Glasgittergeleges einen vorbestimmten Durchmesser nicht überschreiten, da ansonsten das Eindringen bzw. Durchdringen der Polymermatrix durch das Glasgittergelege gehindert wäre.

In einer weiteren, bevorzugten Ausführungsform kann der Verbundwerkstoff eine PET-Vliesschicht aufweisen. Dabei kann die PET-Vliesschicht aus einem PET-Vlies bestehen, welcher Polyethylenterephthalat enthält oder daraus besteht. Das PET-Vlies weist vorzugsweise ein Flächengewicht von 20 bis 60 g/m², vorzugsweise von 30 bis 50 g/m², auf.

Das Vorsehen der PET-Vliesschicht hat den Vorteil, dass ein Durchdringen oder Durchtropfen der Polymermatrix und ein Verkleben der Polymermatrix mit einer Walze des Glättwerkzeugs vermieden wird. Darüber hinaus kann das PET-Vlies die Anbindung des erfindungsgemäßen Verbundmaterials an eine unterliegende, d.h. auf der Innenseite des erfindungsgemäßen Verbundmaterials angeordnete, Kernstruktur, wie beispielsweise eine Schaum- oder Wabenstruktur, verbessern und stellt die Verklebungsseite dar. Dabei ist besonders vorteilhaft, wenn die Verbindung auf einer mechanischen Haftung beruht, ohne dass ein Verkleben oder eine andere Art des chemischen Verbindens erforderlich wäre.

In einer bevorzugten Ausführungsform kann der Verbundwerkstoff die nachfolgende Schichtenfolge aufweisen:
- die PET-Vliesschicht;
- die erste Thermoplastschicht;
- die Glasgittergelege-Schicht; und
- die zweite Thermoplastschicht.

Des Weiteren kann der Verbundwerkstoff eine Dekorschicht aufweisen, wobei die Dekorschicht vorzugsweise im Inline-Coating-Verfahren extrudiert wird. Dabei kann die Dekorschicht aus einem Dekormaterial bestehen, welches einen vierten Thermoplasten enthält oder daraus besteht. Der vierte Thermoplast kann wenigstens ein Polymer enthalten oder aus einem Polymer bestehen oder aus einem Gemisch aus mehreren Polymeren bestehen, wobei das Polymer ausgewählt ist aus einer Gruppe, welche besteht aus: einem Polyolefin, insbesondere Polyethylen oder Polypropylen, einem Polyamid, einem thermoplastischen Olefin, einem thermoplastischen Elastomer, einem Polycarbonat, einem Polyacryl, einem Copolymer derselben, einer Thermoplast-Abmischung, und einem reaktiven Polymer, vorzugsweise einem ungesättigten Polyesterharz, einem Epoxidharz oder einem Polyurethan. Der vierte Thermoplast ist vorzugsweise ein Polyolefin, insbesondere Polypropylen. Die Dekorschicht enthält vorzugsweise keine Glasfasern. Die Dekorschicht kann insbesondere zur Gestaltung des äußeren Erscheinungsbilds des Verbundwerkstoffs vorgesehen sein und eingesetzt werden.

In einer bevorzugten Ausführungsform weist der Verbundwerkstoff die nachfolgende Schichtenfolge auf:
- die PET-Vliesschicht;
- die erste Thermoplastschicht;
- die Glasgittergelege-Schicht;
- die zweite Thermoplastschicht; und
- die Dekorschicht.

Verfahrenstechnisch wird die erfindungsgemäße Aufgabe durch das Verfahren nach Anspruch 14 gelöst. Dabei können beim erfindungsgemäßen Verfahren die vorstehend diskutierten Materialien in beliebiger Kombination eingesetzt werden. Die vorstehend diskutierten Merkmale und Vorteile der Materialien oder Materialkombinationen gelten dabei entsprechend auch für das erfindungsgemäßen Verfahren. Das Verfahren dient vorzugsweise zur Herstellung des erfindungsgemäßen, vorstehend beschriebenen Verbundwerkstoffs gemäß dem ersten Aspekt. Das Verfahren weist wenigstens die Schritte auf:
(a) Extrudieren eines ersten Thermoplasten, vorzugsweise mittels einer Breitschlitzdüse, wodurch eine erste Thermoplastschicht erhalten wird; und
(b) Glätten der in Schritt (a) erhaltenen ersten Thermoplastschicht, vorzugsweise mittels eines Glättwerks.

Dabei enthält die erste Thermoplastschicht den ersten Thermoplasten oder besteht daraus. Der erste Thermoplast weist Glasfasern in einem Massenanteil zwischen 5 und 60 %, vorzugsweise zwischen 20 und 40 %, auf. Wenigstens 60 Massen-%, vorzugsweise wenigstens 80 Massen-%, der Glasfasern des ersten Thermoplasten weisen eine Länge von 8 bis 10 mm auf. Der erste Thermoplast weist einen Schmelzflussindex zwischen 2 und 10 g/min, gemessen bei 230 °C und 2,16 kg gemäß DIN 53735, auf. Die Temperatur des ersten Thermoplasten ist beim Extrudieren in Schritt (a) vorzugsweise auf eine Temperatur zwischen 220 und 230 °C eingestellt.

Die vorstehend, in Zusammenhang mit dem erfindungsgemäßen Verbundwerkstoff gemäß dem ersten Aspekt beschriebenen Merkmale und Vorteile gelten für das erfindungsgemäße Verfahren analog.

Verfahrenstechnisch wird die erfindungsgemäße Aufgabe ferner durch das Verfahren nach Anspruch 15 gelöst. Dabei können beim erfindungsgemäßen Verfahren die vorstehend diskutierten Materialien in beliebiger Kombination eingesetzt werden. Die vorstehend diskutierten Merkmale und Vorteile der Materialien oder Materialkombinationen gelten dann entsprechend auch für das erfindungsgemäßen Verfahren. Das Verfahren dient vorzugsweise zur Herstellung des erfindungsgemäßen, vorstehend beschriebenen Verbundwerkstoffs gemäß dem zweiten Aspekt. Das Verfahren weist wenigstens die Schritte auf:
(a) Extrudieren eines ersten Thermoplasten, vorzugsweise mittels einer Breitschlitzdüse, wodurch eine erste Thermoplastschicht erhalten wird;
(b) Aufbringen der ersten Thermoplastschicht auf eine Glasgittergelege-Schicht; und
(c) Glätten des in Schritt (b) erhaltenen Verbundes, vorzugsweise mittels eines Glättwerks.

Dabei enthält die erste Thermoplastschicht den ersten Thermoplasten oder besteht daraus. Der erste Thermoplast weist Glasfasern in einem Massenanteil zwischen 5 und 60 %, vorzugsweise zwischen 20 und 40 %, auf. Wenigstens 60 Massen-%, vorzugsweise wenigstens 80 Massen-%, der Glasfasern des ersten Thermoplasten weisen eine Länge von 8 bis 10 mm auf. Der erste Thermoplast weist einen Schmelzflussindex zwischen 2 und 10 g/min, gemessen bei 230 °C und 2,16 kg gemäß DIN 53735, auf. Die Temperatur des ersten Thermoplasten ist beim Extrudieren in Schritt (a) vorzugsweise auf eine Temperatur zwischen 220 und 230 °C eingestellt. Die Glasgittergelege-Schicht enthält ein Glasgittergelege oder besteht daraus.

Die vorstehend, in Zusammenhang mit dem erfindungsgemäßen Verbundwerkstoff gemäß dem zweiten Aspekt beschriebenen Merkmale und Vorteile gelten für das erfindungsgemäße Verfahren dieser Ausführungsform analog.

Vorteilhafte Ausführungsformen des erfindungsgemäßen Verfahrens sind Gegenstand der abhängigen Ansprüche. Die Vorteile des erfindungsgemäßen Verbundwerkstoffs gelten entsprechend auch für das erfindungsgemäße Verfahren.

So kann das erfindungsgemäße Verfahren ferner wenigstens einen der nachfolgenden Schritte aufweisen:
(d) Extrudieren eines zweiten Thermoplasten, vorzugsweise mittels einer Breitschlitzdüse, wodurch eine zweite Thermoplastschicht erhalten wird;
(e) Aufbringen der zweiten Thermoplastschicht auf die der ersten Thermoplastschicht gegenüberliegende Seite der Glasgittergelege-Schicht des in Schritt (c) erhaltenen Verbundes; und
(f) Glätten des in Schritt (e) erhaltenen Verbundes, vorzugsweise mittels eines Glättwerks.

Dabei kann die zweite Thermoplastschicht den zweiten Thermoplasten enthalten oder daraus bestehen. Der zweite Thermoplast kann Glasfasern in einem Massenanteil zwischen 5 und 60 %, vorzugsweise zwischen 20 und 40 %, aufweisen. Wenigstens 60 Massen-%, vorzugsweise wenigstens 80 Massen-%, der Glasfasern des zweiten Thermoplasten können eine Länge von 8 bis 10 mm aufweisen. Der zweite Thermoplast kann einen Schmelzflussindex zwischen 2 und 10 g/min, gemessen bei 230 °C und 2,16 kg gemäß DIN 53735, aufweisen.

Die vorstehend, in Zusammenhang mit dem erfindungsgemäßen Verbundwerkstoff gemäß dem dritten Aspekt beschriebenen Merkmale und Vorteile gelten für das erfindungsgemäße Verfahren dieser Ausführungsform analog.

Ferner kann das erfindungsgemäße Verfahren wenigstens einen der nachfolgenden Schritte aufweisen:
(g) Laminieren einer Dekorschicht auf die zweite Thermoplastschicht des in Schritt (f) erhaltenen Verbundes; und
(h) vorzugsweise Glätten des in Schritt (g) erhaltenen Verbundes, vorzugsweise mittels eines Glättwerks.

Die Dekorschicht kann im Inline-Coating-Verfahren extrudiert werden. Die Dekorschicht kann aus einem Dekormaterial bestehen, welches einen vierten Thermoplasten enthält oder daraus besteht. Der vierte Thermoplast kann ein Polyolefin, insbesondere Polypropylen, sein. Die Dekorschicht enthält vorzugsweise keine Glasfasern.

Schließlich wird die erfindungsgemäße Aufgabe durch die Verwendungen nach den Ansprüchen 18 und 19 gelöst. Die Vorteile des erfindungsgemäßen Verbundwerkstoffs gelten für die erfindungsgemäßen Verwendungen analog.

So wird die Verwendung eines glasfaserverstärkten Thermoplasten als ein Material für einen Verbundwerkstoff zur Verbesserung der mechanischen Eigenschaften, vorzugsweise der Festigkeit, der Steifigkeit und der geringen Wärmeausdehnung, des Verbundwerkstoffs beansprucht. Dabei weist der glasfaserverstärkte Thermoplast Glasfasern in einem Massenanteil zwischen 5 und 60 %, vorzugsweise zwischen 20 und 40 %, auf. Wenigstens 60 Massen-%, vorzugsweise wenigstens 80 Massen-%, der Glasfasern des glasfaserverstärkten Thermoplasten weisen eine Länge von 8 bis 10 mm auf. Der glasfaserverstärkte Thermoplast weist ein thermoplastisches Polymer mit einen Schmelzflussindex zwischen 2 und 10 g/min, gemessen bei 230 °C und 2,16 kg gemäß DIN 53735, auf.

Dabei wird der Verbundwerkstoff vorzugsweise durch ein Verfahren hergestellt wird, welches wenigstens die nachfolgenden Schritte umfasst:
(a) Extrudieren des glasfaserverstärkten Thermoplasten, vorzugsweise mittels einer Breitschlitzdüse; und
(b) Glätten des glasfaserverstärkten Thermoplasten, vorzugsweise mittels eines Glättwerks.

Des Weiteren wird die Verwendung eines Glasgittergeleges zur Herstellung eines Verbundwerkstoffs beansprucht, wobei das Glasgittergelege mit einer Schmelzebahn eines Thermoplasten extrudiert wird, um die Maß- und Zugfestigkeit und/oder die Stabilität des Verbundwerkstoffs bezüglich der mechanischen Stabilität (Biegefestigkeit, Steifigkeit und/oder Vermeidung von Schüsseln) und/oder der Temperaturstabilität (Wärme- und/oder Kältestabilität) zu verbessern. Dabei wird der Verbundwerkstoff nach der Extrusion vorzugsweise mittels eines Glättwerks behandelt.

### Weitere Offenbarung der Erfindung und Beispiele

Bespiele für erfindungsgemäß verwendbare, bevorzugte Materialien:
erster Thermoplast (für erste Thermoplastschicht BS): Polypropylen (long glass fibre reinforced) mit 30 % Langglasfasern, Dichte 1120 kg/m³ (ISO 1183), Schmelzflussindex: 2 g/10 min (230 °C, 2,16 kg, ISO 1133)
zweiter Thermoplast (für zweite Thermoplastschicht DS): Polypropylen (long glass fibre reinforced) mit 30 % Langglasfasern, Dichte 1120 kg/m³ (ISO 1183), Schmelzflussindex: 2 g/10 min (230 °C, 2,16 kg, ISO 1133)
dritter Thermoplast (für Glasgelegeschicht CS): Polypropylen, Massenanteil am Glasgelege: 40 %
Glasgittergelege: Glasgittergelege mit Glasvlies, ca. 100 g/m²;
PET-Vlies: PET-Vlies (Verklebungsseite), 50 g/m²
vierter Thermoplast/Dekormaterial (für Dekorschicht ES): Polypropylen natur (nucleated, high cristalline film resin), Dichte 900 bis 1000 kg/m³ (ISO 1183), Schmelzflussindex: 6,5 g/10 min (230 °C, 2,16 kg, ISO 1133) + Masterbatch Farbe
bevorzugte Schichtdicken und Breiten:
   - erste Thermoplastschicht, Glasgittergelege-Schicht, zweite Thermoplastschicht: jeweils 0,3 bis 0,5 mm, vorzugsweise 0,4 mm;
   - PET-Vliesschicht: 0,05 bis 0,3 mm, vorzugsweise 0,2 mm
   - Dekorschicht: 0,2 bis 0,4 mm, vorzugsweise 0,3 mm;
   - Gesamtdicke Verbundwerkstoff: 0,5 bis 2,5 mm, vorzugsweise 0,7 bis 1,5 mm, vorzugsweise 1,5 bis 2,0 mm, vorzugsweise 1,0 bis 2,0 mm, insbesondere 1,4 bis 1,8 mm;
   - Breiten: von 700 bis 2.800 mm;

### Bevorzugte Schichtenaufbauten:

Die Erfindung ist nicht notwendigerweise auf die im Nachfolgenden wiedergegebenen Schichtenaufbauten beschränkt, sondern kann weitere Schichtenaufbauten einschließen. Insbesondere kann der erfindungsgemäße Verbundwerkstoff jeweils weitere zusätzliche Schichten, insbesondere ein oder mehrere Zwischenschichten zwischen einzelnen oder mehreren in den Beispielen angegebenen benachbarten Schichtpaaren, aufweisen.

### Beispiel 1: (BS)

Faserverstärkter, thermoplastischer Verbundwerkstoff mit einer ersten Thermoplastschicht, welches einen ersten Thermoplast aufweist, welches enthält:
- Polypropylen mit einen Schmelzflussindex zwischen 2 und 10 g/min, gemessen bei 230 °C und 2,16 kg gemäß DIN 53735, und
- Glasfasern in einem Massenanteil zwischen 5 und 60 %, wobei wenigstens 60 Massen-% der Glasfasern eine Länge von 8 bis 10 mm aufweisen.

Der Verbundwerkstoff des Beispiels 1 kann beispielsweise hergestellt werden durch Extrudieren des ersten Thermoplasten mittels einer Breitschlitzdüse und Glätten der ersten Thermoplastschicht mittels eines Glättwerks.

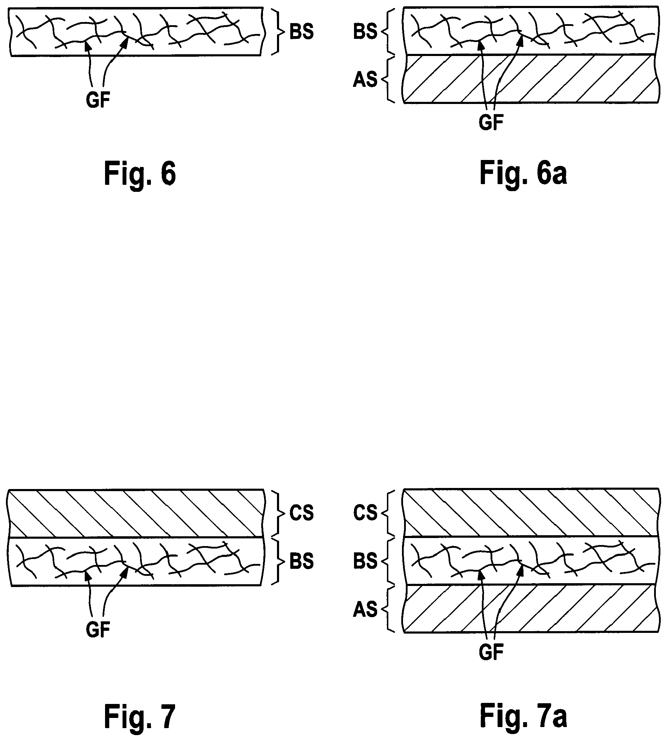

Eine konkrete Ausführungsform des Beispiels 1 ist ein Verbundwerkstoff, aufweisend eine Schicht (BS) enthaltend oder bestehend aus einem Polypropylen (long glass fibre reinforced) mit 30 % Langglasfasern (GF), Dichte 1120 kg/m³ (ISO 1183), Schmelzflussindex: 2 g/10 min (230 °C, 2,16 kg, ISO 1133), wenigstens 60 Massen-% der Glasfasern weisen eine Länge von 8 bis 10 mm auf; Schichtdicke: 0,4 mm (vgl. beispielhafte, nicht maßstäbliche und schematische Schnittdarstellung des Verbundwerkstoffs gemäß Beispiel 1 in Fig. 6).

### Beispiel 2: (BS/CS)

Faserverstärkter, thermoplastischer Verbundwerkstoff mit einer ersten Thermoplastschicht und einer Glasgittergelege-Schicht. Dabei enthält die erste Thermoplastschicht ein erstes Thermoplast, welches enthält:
- Polypropylen mit einem Schmelzflussindex zwischen 2 und 10 g/min, gemessen bei 230 °C und 2,16 kg gemäß DIN 53735, und
- Glasfasern in einem Massenanteil zwischen 5 und 60 %, wobei wenigstens 60 Massen-% der Glasfasern eine Länge von 8 bis 10 mm aufweisen.

Die Glasgittergelege-Schicht enthält ein Glasgittergelege oder besteht daraus, wobei das Glasgittergelege eine quadratische Gitterstruktur mit einer Kantenlänge der Quadrate von beispielsweise 3 mm aufweist. Das Glasgittergelege kann vorzugsweise aus 60 Massen-% Glas und 40 Massen-% Polypropylen bestehen. Optional kann das Glasgittergelege auf einer oder beiden Seiten, vorzugsweise auf einer Seite, ein Glasvlies aufweisen.

Der Verbundwerkstoff des Beispiels 2 kann beispielsweise hergestellt werden durch Extrudieren des ersten Thermoplasten mittels einer Breitschlitzdüse, Aufbringen der dabei erhaltenen, ersten Thermoplastschicht auf die Glasgittergelege-Schicht und Glätten des dabei erhaltenen Verbundes mittels eines Glättwerks.

Eine konkrete Ausführungsform des Beispiels 2 ist ein Verbundwerkstoff, aufweisend die zwei nachfolgend beschriebenen Schichten (vgl. beispielhafte, nicht maßstäbliche und schematische Schnittdarstellung des Verbundwerkstoffs gemäß Beispiel 2 in Fig. 7):
eine erste Schicht (erste Thermoplastschicht BS) enthaltend oder bestehend aus einem Polypropylen (long glass fibre reinforced) mit 30 % Langglasfasern (GF), Dichte 1120 kg/m³ (ISO 1183), Schmelzflussindex: 2 g/10 min (230 °C, 2,16 kg, ISO 1133), wenigstens 60 Massen-% der Glasfasern weisen eine Länge von 8 bis 10 mm auf, Schichtdicke: 0,4 mm; und
eine zweite, weiter außen liegende Schicht (Glasgittergelege-Schicht CS) enthaltend oder bestehend aus einem Glasgittergelege mit Glasvlies, ca. 100 g/m², wobei das Glasgittergelege aus 60 % Glas und 40 % Polypropylen besteht, Schichtdicke: 0,5 mm.

### Beispiel 3: (BS/CS/DS)

Faserverstärkter, thermoplastischer Verbundwerkstoff mit einer ersten Thermoplastschicht, einer Glasgittergelege-Schicht und einer zweiten Thermoplastschicht (in dieser Schichtenfolge). Dabei enthält die erste Thermoplastschicht ein erstes Thermoplast, welches enthält:
- Polypropylen mit einem Schmelzflussindex zwischen 2 und 10 g/min, gemessen bei 230 °C und 2,16 kg gemäß DIN 53735, und
- Glasfasern in einem Massenanteil zwischen 5 und 60 %, wobei wenigstens 60 Massen-% der Glasfasern eine Länge von 8 bis 10 mm aufweisen.

Die Glasgittergelege-Schicht enthält ein Glasgittergelege oder besteht daraus, wobei das Glasgittergelege eine quadratische Gitterstruktur mit einer Kantenlänge der Quadrate von beispielsweise 3 mm aufweist. Das Glasgittergelege kann vorzugsweise aus 60 Massen-% Glas und 40 Massen-% Polypropylen bestehen. Optional kann das Glasgittergelege auf einer oder beiden Seiten, vorzugsweise auf einer Seite, ein Glasvlies aufweisen.

Die zweite Thermoplastschicht enthält ein zweites Thermoplast, welches enthält:
- Polypropylen mit einem Schmelzflussindex zwischen 2 und 10 g/min, gemessen bei 230 °C und 2,16 kg gemäß DIN 53735, und
- Glasfasern in einem Massenanteil zwischen 5 und 60 %, wobei wenigstens 60 Massen-% der Glasfasern eine Länge von 8 bis 10 mm aufweisen.

Der Verbundwerkstoff des Beispiels 3 kann beispielsweise hergestellt werden durch Extrudieren des ersten Thermoplasten mittels einer Breitschlitzdüse, Aufbringen der dabei erhaltenen, ersten Thermoplastschicht auf die Glasgittergelege-Schicht und Glätten des dabei erhaltenen Verbundes mittels eines Glättwerks, Extrudieren des zweiten Thermoplasten mittels einer Breitschlitzdüse, Aufbringen der dabei erhaltenen zweiten Thermoplastschicht auf die der ersten Thermoplastschicht gegenüberliegende Seite der Glasgittergelege-Schicht des vorstehend erhaltenen Verbundes und Glätten des dabei erhaltenen Verbundes mittels eines Glättwerks.

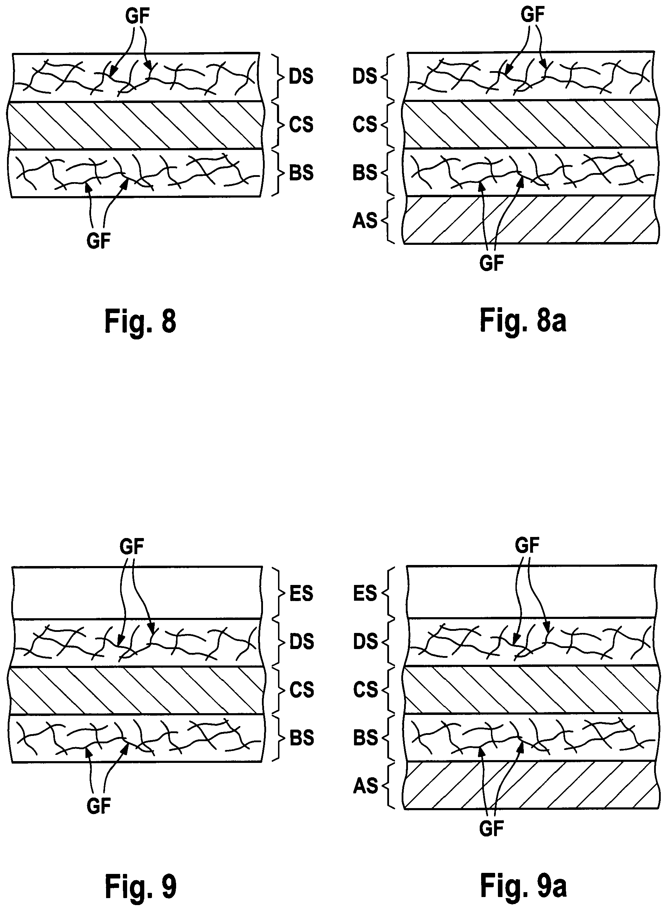

Eine konkrete Ausführungsform des Beispiels 3 ist ein Verbundwerkstoff, aufweisend die drei nachfolgend beschriebenen Schichten (vgl. beispielhafte, nicht maßstäbliche und schematische Schnittdarstellung des Verbundwerkstoffs gemäß Beispiel 3 in Fig. 8):
eine erste Schicht (erste Thermoplastschicht BS) enthaltend oder bestehend aus einem Polypropylen (long glass fibre reinforced) mit 30 % Langglasfasern (GF), Dichte 1120 kg/m³ (ISO 1183), Schmelzflussindex: 2 g/10 min (230 °C, 2,16 kg, ISO 1133), wenigstens 60 Massen-% der Glasfasern weisen eine Länge von 8 bis 10 mm auf; Schichtdicke: 0,4 mm;
eine zweite, weiter außen liegende Schicht (Glasgittergelege-Schicht CS) enthaltend oder bestehend aus einem Glasgittergelege mit Glasvlies, ca. 100 g/m², wobei das Glasgittergelege aus 60 % Glas und 40 % Polypropylen besteht, Schichtdicke: 0,5 mm; und
eine dritte, noch weiter außen liegende Schicht (zweite Thermoplastschicht DS) enthaltend oder bestehend aus einem Polypropylen (long glass fibre reinforced) mit 30 % Langglasfasern (GF), Dichte 1120 kg/m³ (ISO 1183), Schmelzflussindex: 2 g/10 min (230 °C, 2,16 kg, ISO 1133), wenigstens 60 Massen-% der Glasfasern weisen eine Länge von 8 bis 10 mm auf; Schichtdicke: 0,4 mm.

### Beispiel 4: (BS/CS/DS/ES)

Faserverstärkter, thermoplastischer Verbundwerkstoff mit einer ersten Thermoplastschicht, einer Glasgittergelege-Schicht, einer zweiten Thermoplastschicht und einer Dekorschicht (in dieser Schichtenfolge).

Die erste Thermoplastschicht enthält ein erstes Thermoplast, welches enthält:
- Polypropylen mit einem Schmelzflussindex zwischen 2 und 10 g/min, gemessen bei 230 °C und 2,16 kg gemäß DIN 53735, und
- Glasfasern in einem Massenanteil zwischen 5 und 60 %, wobei wenigstens 60 Massen-% der Glasfasern eine Länge von 8 bis 10 mm aufweisen.

Die Glasgittergelege-Schicht enthält ein Glasgittergelege oder besteht daraus, wobei das Glasgittergelege eine quadratische Gitterstruktur mit einer Kantenlänge der Quadrate von beispielsweise 3 mm aufweist. Das Glasgittergelege kann vorzugsweise aus 60 Massen-% Glas und 40 Massen-% Polypropylen bestehen. Optional kann das Glasgittergelege auf einer oder beiden Seiten, vorzugsweise auf einer Seite, ein Glasvlies aufweisen.

Die zweite Thermoplastschicht enthält ein zweites Thermoplast, welches enthält:
- Polypropylen mit einem Schmelzflussindex zwischen 2 und 10 g/min, gemessen bei 230 °C und 2,16 kg gemäß DIN 53735, und
- Glasfasern in einem Massenanteil zwischen 5 und 60 %, wobei wenigstens 60 Massen-% der Glasfasern eine Länge von 8 bis 10 mm aufweisen.

Dabei besteht die Dekorschicht aus einem Dekormaterial, welches einen vierten Thermoplasten enthält oder daraus besteht. Dabei ist der vierte Thermoplast vorzugsweise ein Polyolefin, insbesondere Polypropylen natur, Dichte 900 bis 1000 kg/m³ (ISO 1183), Schmelzflussindex: 6,5 g/10 min (230 °C, 2,16 kg, ISO 1133), Masterbatch Farbe.

Der Verbundwerkstoff des Beispiels 4 kann beispielsweise hergestellt werden durch Extrudieren des ersten Thermoplasten mittels einer Breitschlitzdüse, Aufbringen der dabei erhaltenen, ersten Thermoplastschicht auf die Glasgittergelege-Schicht und Glätten des dabei erhaltenen Verbundes mittels eines Glättwerks, Extrudieren des zweiten Thermoplasten mittels einer Breitschlitzdüse, Aufbringen der dabei erhaltenen zweiten Thermoplastschicht auf die der ersten Thermoplastschicht gegenüberliegende Seite der Glasgittergelege-Schicht des vorstehend erhaltenen Verbundes und Glätten des dabei erhaltenen Verbundes mittels eines Glättwerks, Extrudieren der Dekorschicht, vorzugsweise im Inline-Coating-Verfahren, Laminieren der Dekorschicht auf die zweite Thermoplastschicht des zuvor erhaltenen Verbundes und Glätten des dabei erhaltenen Verbundes mittels eines Glättwerks.

Eine konkrete Ausführungsform des Beispiels 4 ist ein Verbundwerkstoff, aufweisend die vier nachfolgend beschriebenen Schichten (vgl. beispielhafte, nicht maßstäbliche und schematische Schnittdarstellung des Verbundwerkstoffs gemäß Beispiel 4 in Fig. 9):
eine erste Schicht (erste Thermoplastschicht BS) enthaltend oder bestehend aus einem Polypropylen (long glass fibre reinforced) mit 30 % Langglasfasern (GF), Dichte 1120 kg/m³ (ISO 1183), Schmelzflussindex: 2 g/10 min (230 °C, 2,16 kg, ISO 1133), wenigstens 60 Massen-% der Glasfasern weisen eine Länge von 8 bis 10 mm auf; Schichtdicke: 0,4 mm;
eine zweite, weiter außen liegende Schicht (Glasgittergelege-Schicht CS) enthaltend oder bestehend aus einem Glasgittergelege mit Glasvlies, ca. 100 g/m², wobei das Glasgittergelege aus 60 % Glas und 40 % Polypropylen besteht, Schichtdicke: 0,5 mm;
eine dritte, noch weiter außen liegende Schicht (zweite Thermoplastschicht DS) enthaltend oder bestehend aus einem Polypropylen (long glass fibre reinforced) mit 30 % Langglasfasern (GF), Dichte 1120 kg/m³ (ISO 1183), Schmelzflussindex: 2 g/10 min (230 °C, 2,16 kg, ISO 1133), wenigstens 60 Massen-% der Glasfasern weisen eine Länge von 8 bis 10 mm auf; Schichtdicke: 0,4 mm; und
eine vierte, noch weiter außen liegende Schicht (Dekorschicht ES) enthaltend oder bestehend aus einem Polypropylen natur (vierter Thermoplast; nucleated, high cristalline film resin), Dichte 900 bis 1000 kg/m³ (ISO 1183), Schmelzflussindex: 6,5 g/10 min (230 °C, 2,16 kg, ISO 1133), Masterbatch Farbe; Schichtdicke: 0,3 mm.

### Beispiele 1a (AS/BS), 2a (AS/BS/CS), 3a (AS/BS/CS/DS), 4a (AS/BS/CS/DS/ES):

Ferner werden die Beispiele 1a, 2a, 3a, und 4a offenbart, welche jeweils identisch sind mit den vorstehend genannten Beispielen 1, 2, 3 und 4, mit der Ausnahme, dass die Verbundwerkstoffe der Beispiele 1a, 2a, 3a, und 4a jeweils zusätzlich noch eine PET-Vliesschicht aufweisen. Dabei besteht die PET-Vliesschicht aus einem PET-Vlies, welcher Polyethylenterephthalat enthält oder daraus besteht. Das PET-Vlies weist. vorzugsweise ein Flächengewicht von 20 bis 60 g/m² auf. Die PET-Vliesschicht ist bei den Verbundwerkstoffen der Beispiele 1a, 2a, 3a, und 4a jeweils als innerste Schicht, benachbart zur ersten Thermoplastschicht angeordnet.

Der Verbundwerkstoff der Beispiele 1a, 2a, 3a, und 4a können beispielsweise hergestellt werden, wie vorstehend für die Beispiele 1, 2, 3 und 4 beschrieben, wobei jedoch abweichend davon der erste Schritt jeweils ein Extrudieren des ersten Thermoplasten mittels einer Breitschlitzdüse auf eine PET-Vliesschicht (Verklebungsseite) umfassen kann (vgl. Beispiel 1a). Enthält der Verbundwerkstoff auch eine Glasgittergelege-Schicht (vgl. Beispiele 2a, 3a, und 4a), so umfasst der erste Schritt vorzugsweise jeweils ein Extrudieren des ersten Thermoplasten mittels einer Breitschlitzdüse zwischen die PET-Vliesschicht und die Glasgittergelege-Schicht.

Der Verbundwerkstoff des Beispiels 1a kann beispielsweise hergestellt werden durch Extrudieren des ersten Thermoplasten mittels einer Breitschlitzdüse auf eine PET-Vliesschicht (Verklebungsseite) und Glätten der ersten Thermoplastschicht mittels eines Glättwerks.

Konkrete Ausführungsformen der Beispiele 1a, 2a, 3a, und 4a (vgl. beispielhafte, nicht maßstäbliche und schematische Schnittdarstellungen der Verbundwerkstoffe gemäß diesen Beispielen in Fig. 6a, 7a, 8a und 9a) sind identisch mit den konkreten Ausführungsformen wie sie vorstehend für die Beispiele 1, 2, 3 und 4 offenbart sind, mit der Ausnahme, dass die Verbundwerkstoffe der Beispiele 1a, 2a, 3a, und 4a jeweils zusätzlich noch eine zur jeweiligen ersten Schicht weiter innenliegende, vorzugsweise zur jeweiligen ersten Schicht benachbart angeordneten, PET-Vliesschicht (AS) aufweisen, aufweisend oder bestehend aus PET-Vlies (Verklebungsseite), 50 g/m², Schichtdicke: 0,2 mm.

### Beispiel 5: (AS/BS/CS/DS)

Faserverstärkter, thermoplastischer Verbundwerkstoff mit einer PET-Vliesschicht, einer ersten Thermoplastschicht, einer Glasgittergelege-Schicht und einer zweiten Thermoplastschicht (in dieser Schichtenfolge).

Dabei besteht die PET-Vliesschicht aus einem PET-Vlies, welcher Polyethylenterephthalat enthält oder daraus besteht. Das PET-Vlies weist vorzugsweise ein Flächengewicht von 20 bis 60 g/m² auf.

Die erste Thermoplastschicht enthält ein erstes Thermoplast, welches enthält:
- Polypropylen mit einem Schmelzflussindex zwischen 2 und 10 g/min, gemessen bei 230 °C und 2,16 kg gemäß DIN 53735, und
- Glasfasern in einem Massenanteil zwischen 5 und 60 %, wobei wenigstens 60 Massen-% der Glasfasern eine Länge von 8 bis 10 mm aufweisen.

Die Glasgittergelege-Schicht enthält ein Glasgittergelege oder besteht daraus, wobei das Glasgittergelege eine quadratische Gitterstruktur mit einer Kantenlänge der Quadrate von beispielsweise 3 mm aufweist. Das Glasgittergelege kann vorzugsweise aus 60 Massen-% Glas und 40 Massen-% Polypropylen bestehen. Optional kann das Glasgittergelege auf einer oder beiden Seiten, vorzugsweise auf einer Seite, ein Glasvlies aufweisen.

Die zweite Thermoplastschicht enthält ein zweites Thermoplast, welches enthält:
- Polypropylen mit einem Schmelzflussindex zwischen 2 und 10 g/min, gemessen bei 230 °C und 2,16 kg gemäß DIN 53735, und
- Glasfasern in einem Massenanteil zwischen 5 und 60 %, wobei wenigstens 60 Massen-% der Glasfasern eine Länge von 8 bis 10 mm aufweisen.

Der Verbundwerkstoff des Beispiels 5 kann beispielsweise hergestellt werden durch Extrudieren des ersten Thermoplasten mittels einer Breitschlitzdüse zwischen die PET-Vliesschicht und die Glasgittergelege-Schicht und Glätten des dabei erhaltenen Verbundes mittels eines Glättwerks, Extrudieren des zweiten Thermoplasten mittels einer Breitschlitzdüse, Aufbringen der dabei erhaltenen zweiten Thermoplastschicht auf die der ersten Thermoplastschicht gegenüberliegende Seite der Glasgittergelege-Schicht des vorstehend erhaltenen Verbundes, und Glätten des dabei erhaltenen Verbundes mittels eines Glättwerks.

Eine konkrete Ausführungsform des Beispiels 5 ist ein Verbundwerkstoff, aufweisend die vier nachfolgend beschriebenen Schichten (vgl. beispielhafte, nicht maßstäbliche und schematische Schnittdarstellung des Verbundwerkstoffs gemäß Beispiel 5 in Fig. 8a):
eine erste Schicht (PET-Vliesschicht AS) enthaltend oder bestehend aus PET-Vlies (Verklebungsseite), 50 g/m², Schichtdicke: 0,2 mm;
eine zweite, weiter außen liegende Schicht (erste Thermoplastschicht BS) enthaltend oder bestehend aus einem Polypropylen (long glass fibre reinforced) mit 30 % Langglasfasern (GF), Dichte 1120 kg/m³ (ISO 1183), Schmelzflussindex: 2 g/10 min (230 °C, 2,16 kg, ISO 1133), wenigstens 60 Massen-% der Glasfasern weisen eine Länge von 8 bis 10 mm auf; Schichtdicke: 0,4 mm;
eine dritte, noch weiter außen liegende Schicht (Glasgittergelege-Schicht CS) enthaltend oder bestehend aus einem Glasgittergelege mit Glasvlies, ca. 100 g/m², wobei das Glasgittergelege aus 60 % Glas und 40 % Polypropylen besteht, Schichtdicke: 0,5 mm; und
eine vierte, noch weiter außen liegende Schicht (zweite Thermoplastschicht DS) enthaltend oder bestehend aus einem Polypropylen (long glass fibre reinforced) mit 30 % Langglasfasern (GF), Dichte 1120 kg/m³ (ISO 1183), Schmelzflussindex: 2 g/10 min (230 °C, 2,16 kg, ISO 1133), wenigstens 60 Massen-% der Glasfasern weisen eine Länge von 8 bis 10 mm auf; Schichtdicke: 0,4 mm.

### Beispiel 6: (AS/BS/CS/DS/ES)

Faserverstärkter, thermoplastischer Verbundwerkstoff mit einer PET-Vliesschicht, einer ersten Thermoplastschicht, einer Glasgittergelege-Schicht, einer zweiten Thermoplastschicht und einer Dekorschicht (in dieser Schichtenfolge).

Dabei besteht die PET-Vliesschicht aus einem PET-Vlies, welcher Polyethylenterephthalat enthält oder daraus besteht. Das PET-Vlies weist vorzugsweise ein Flächengewicht von 20 bis 60 g/m² auf.

Die erste Thermoplastschicht enthält ein erstes Thermoplast, welches enthält:
- Polypropylen mit einem Schmelzflussindex zwischen 2 und 10 g/min, gemessen bei 230 °C und 2,16 kg gemäß DIN 53735, und
- Glasfasern in einem Massenanteil zwischen 5 und 60 %, wobei wenigstens 60 Massen-% der Glasfasern eine Länge von 8 bis 10 mm aufweisen.

Die Glasgittergelege-Schicht enthält ein Glasgittergelege oder besteht daraus, wobei das Glasgittergelege eine quadratische Gitterstruktur mit einer Kantenlänge der Quadrate von beispielsweise 3 mm aufweist. Das Glasgittergelege kann vorzugsweise aus 60 Massen-% Glas und 40 Massen-% Polypropylen bestehen. Optional kann das Glasgittergelege auf einer oder beiden Seiten, vorzugsweise auf einer Seite, ein Glasvlies aufweisen.

Die zweite Thermoplastschicht enthält ein zweites Thermoplast, welches enthält:
- Polypropylen mit einem Schmelzflussindex zwischen 2 und 10 g/min, gemessen bei 230 °C und 2,16 kg gemäß DIN 53735, und
- Glasfasern in einem Massenanteil zwischen 5 und 60 %, wobei wenigstens 60 Massen-% der Glasfasern eine Länge von 8 bis 10 mm aufweisen.

Dabei besteht die Dekorschicht aus einem Dekormaterial, welches einen vierten Thermoplasten enthält oder daraus besteht. Dabei ist der vierte Thermoplast vorzugsweise ein Polyolefin, insbesondere Polypropylen natur, Dichte 900 bis 1000 kg/m³ (ISO 1183), Schmelzflussindex: 6,5 g/10 min (230 °C, 2,16 kg, ISO 1133), Masterbatch Farbe.

Der Verbundwerkstoff des Beispiels 6 kann beispielsweise hergestellt werden durch Extrudieren des ersten Thermoplasten mittels einer Breitschlitzdüse zwischen die PET-Vliesschicht und die Glasgittergelege-Schicht und Glätten des dabei erhaltenen Verbundes mittels eines Glättwerks, Extrudieren des zweiten Thermoplasten mittels einer Breitschlitzdüse, Aufbringen der dabei erhaltenen zweiten Thermoplastschicht auf die der ersten Thermoplastschicht gegenüberliegende Seite der Glasgittergelege-Schicht des vorstehend erhaltenen Verbundes, Glätten des dabei erhaltenen Verbundes mittels eines Glättwerks, und Extrudieren der Dekorschicht, vorzugsweise im Inline-Coating-Verfahren, Laminieren der Dekorschicht auf die zweite Thermoplastschicht des zuvor erhaltenen Verbundes und Glätten des dabei erhaltenen Verbundes mittels eines Glättwerks.

Eine konkrete Ausführungsform des Beispiels 6 ist ein Verbundwerkstoff, aufweisend die vier nachfolgend beschriebenen Schichten (vgl. beispielhafte, nicht maßstäbliche und schematische Schnittdarstellung des Verbundwerkstoffs gemäß Beispiel 6 in Fig. 9a):
eine erste Schicht (PET-Vliesschicht AS) enthaltend oder bestehend aus PET-Vlies (Verklebungsseite), 50 g/m², Schichtdicke: 0,2 mm;
eine zweite, weiter außen liegende Schicht (erste Thermoplastschicht BS) enthaltend oder bestehend aus einem Polypropylen (long glass fibre reinforced) mit 30 % Langglasfasern (GF), Dichte 1120 kg/m³ (ISO 1183), Schmelzflussindex: 2 g/10 min (230 °C, 2,16 kg, ISO 1133), wenigstens 60 Massen-% der Glasfasern weisen eine Länge von 8 bis 10 mm auf; Schichtdicke: 0,4 mm;
eine dritte, noch weiter außen liegende Schicht (Glasgittergelege-Schicht CS) enthaltend oder bestehend aus einem Glasgittergelege mit Glasvlies, ca. 100 g/m², wobei das Glasgittergelege aus 60 % Glas und 40 % Polypropylen besteht, Schichtdicke: 0,5 mm;
eine vierte, noch weiter außen liegende Schicht (zweite Thermoplastschicht DS) enthaltend oder bestehend aus einem Polypropylen (long glass fibre reinforced) mit 30 % Langglasfasern (GF), Dichte 1120 kg/m³ (ISO 1183), Schmelzflussindex: 2 g/10 min (230 °C, 2,16 kg, ISO 1133), wenigstens 60 Massen-% der Glasfasern weisen eine Länge von 8 bis 10 mm auf; Schichtdicke: 0,4 mm; und
eine fünfte, noch weiter außen liegende Schicht (Dekorschicht ES) enthaltend oder bestehend aus einem Polypropylen natur (vierter Thermoplast; nucleated, high cristalline film resin), Dichte 900 bis 1000 kg/m³ (ISO 1183), Schmelzflussindex: 6,5 g/10 min (230 °C, 2,16 kg, ISO 1133), Masterbatch Farbe; Schichtdicke: 0,3 mm.

Das erfindungsgemäße beanspruchte Verfahren lässt sich mit den dem Fachmann bekannten Anlagen zur Herstellung von technischen Folien auf dem Gebiet der Erfindung durchführen. Mit diesen Anlagen lassen sich auch die erfindungsgemäß beanspruchten Verbundwerkstoffe herstellen.

Beispielhaft wird in diesem Zusammenhang auf die Anlagen, insbesondere die Folien-Extrusionsanlagen, der Firma KraussMaffei Berstorff GmbH, Hannover/Deutschland, verwiesen. Diese Anlagen können Ein- oder Zweischneckenextruder (z.B. ZE-Baureihe) als Mono- oder Coextrusionsanlage, eine Glättwerkstechnik und ein Downstream-Equipment aufweisen. Weitere Hinweise können beispielsweise dem Internetauftritt https://www.kraussmaffeiberstorff.com/de/kunststofftechnik.html entnommen werden. Weitere Anbieter von Anlagen, insbesondere Extrusionsanlagen, mit denen die erfindungsgemäßen Verbundwerkstoffe hergestellt werden können, sind:
- Firma BC Extrusion Holding GmbH, Bad Oeynhausen/Deutschland (https://www.hattenfeld-cincnnnati.com/de-de/anwendungen/nicht-pvc-platten.html);
- Firma BREYER GmbH Maschinenfabrik, Singen/Deutschland (https://www.breyer-extr.com/index.php?id=71&line=5); und
- Firma Kuhne Gesellschaft mit beschränkter Haftung, St. Augustin/Deutschland (http://www.kuhne-mb.de/de/produkte-0/kuhne-flachfolien-und-plattenanlagenmassgeschneidertes-know-how-fuer-ihren).

## Patentansprüche

1. Faserverstärkter, thermoplastischer Verbundwerkstoff (V);
wobei der Verbundwerkstoff (V) eine erste Thermoplastschicht (BS) aufweist, welche einen ersten, glasfaserverstärkten Thermoplasten (B) enthält oder daraus besteht;
wobei der erste Thermoplast (B) Glasfasern in einem Massenanteil zwischen 5 und 60 %, vorzugsweise zwischen 20 und 40 %, aufweist;
wobei wenigstens 60 Massen-%, vorzugsweise wenigstens 80 Massen-%, der Glasfasern des ersten Thermoplasten (B) eine Länge von 8 bis 10 mm aufweisen;
wobei der erste Thermoplast (B) einen Schmelzflussindex zwischen 2 und 10 g/min, gemessen bei 230 °C und 2,16 kg gemäß DIN 53735, aufweist; und wobei der Verbundwerkstoff (V) vorzugsweise durch ein Verfahren herstellbar ist oder hergestellt wird, welches wenigstens die nachfolgenden Schritte umfasst:
(a) Extrudieren des ersten Thermoplasten (B), vorzugsweise mittels einer Breitschlitzdüse, wodurch die erste Thermoplastschicht (BS) erhalten wird; und
(b) Glätten der ersten Thermoplastschicht (BS), vorzugsweise mittels eines Glättwerks.

2. Faserverstärkter, thermoplastischer Verbundwerkstoff (V);
wobei der Verbundwerkstoff (V) eine Glasgittergelege-Schicht (CS) aufweist, welche ein Glasgittergelege (C) enthält oder daraus besteht;
wobei der Verbundwerkstoff (V) ferner eine erste Thermoplastschicht (BS) aufweist, welche einen ersten glasfaserverstärkten Thermoplasten (B) enthält oder daraus besteht;
wobei der erste Thermoplast (B) Glasfasern in einem Massenanteil zwischen 5 und 60 %, vorzugsweise zwischen 20 und 40 %, aufweist,
wobei wenigstens 60 Massen-%, vorzugsweise wenigstens 80 Massen-%, der Glasfasern des ersten Thermoplasten (B) eine Länge von 8 bis 10 mm aufweisen;
wobei der erste Thermoplast (B) einen Schmelzflussindex zwischen 2 und 10 g/min, gemessen bei 230 °C und 2,16 kg gemäß DIN 53735, aufweist;
wobei der Verbundwerkstoff (V) die nachfolgende Schichtenfolge aufweist:
die erste Thermoplastschicht (BS); und
die Glasgittergelege-Schicht (CS); und
wobei der Verbundwerkstoff (V) vorzugsweise durch ein Verfahren herstellbar ist oder hergestellt wird, welches wenigstens die nachfolgenden Schritte umfasst:
(a) Extrudieren des ersten Thermoplasten (B), vorzugsweise mittels einer Breitschlitzdüse, wodurch die erste Thermoplastschicht (BS) erhalten wird;
(b) Aufbringen der ersten Thermoplastschicht (BS) auf die Glasgittergelege-Schicht (CS); und
(c) Glätten des in Schritt (b) erhaltenen Verbundes, vorzugsweise mittels eines Glättwerks.

3. Faserverstärkter, thermoplastischer Verbundwerkstoff (V);
wobei der Verbundwerkstoff (V) eine Glasgittergelege-Schicht (CS) aufweist, welche ein Glasgittergelege (C) enthält oder daraus besteht;
wobei der Verbundwerkstoff (V) ferner eine erste Thermoplastschicht (BS) aufweist, welche einen ersten glasfaserverstärkten Thermoplasten (B) enthält oder daraus besteht;
wobei der Verbundwerkstoff (V) ferner eine zweite Thermoplastschicht (DS) aufweist, welche einen zweiten glasfaserverstärkten Thermoplasten (D) enthält oder daraus besteht;
wobei der erste Thermoplast (B) Glasfasern in einem Massenanteil zwischen 5 und 60 %, vorzugsweise zwischen 20 und 40 %, aufweist,
wobei wenigstens 60 Massen-%, vorzugsweise wenigstens 80 Massen-%, der Glasfasern des ersten Thermoplasten (B) eine Länge von 8 bis 10 mm aufweisen;
wobei der erste Thermoplast (B) einen Schmelzflussindex zwischen 2 und 10 g/min, gemessen bei 230 °C und 2,16 kg gemäß DIN 53735, aufweist;
wobei der zweite Thermoplast (D) Glasfasern in einem Massenanteil zwischen 5 und 60 %, vorzugsweise zwischen 20 und 40 %, aufweist;
wobei wenigstens 60 Massen-%, vorzugsweise wenigstens 80 Massen-%, der Glasfasern des zweiten Thermoplasten (D) eine Länge von 8 bis 10 mm aufweisen;
wobei der zweite Thermoplast (D) einen Schmelzflussindex zwischen 2 und 10 g/min, gemessen bei 230 °C und 2,16 kg gemäß DIN 53735, aufweist; und wobei der Verbundwerkstoff (V) die nachfolgende Schichtenfolge aufweist:
die erste Thermoplastschicht (BS);
die Glasgittergelege-Schicht (CS); und
die zweite Thermoplastschicht (DS); und
wobei der Verbundwerkstoff (V) vorzugsweise durch ein Verfahren herstellbar ist oder hergestellt wird, welches wenigstens die nachfolgenden Schritte umfasst:
(a) Extrudieren des ersten Thermoplasten (B), vorzugsweise mittels einer Breitschlitzdüse, wodurch die erste Thermoplastschicht (BS) erhalten wird;
(b) Aufbringen der ersten Thermoplastschicht (BS) auf die Glasgittergelege-Schicht (CS);
(c) Glätten des in Schritt (b) erhaltenen Verbundes, vorzugsweise mittels eines Glättwerks;
(d) Extrudieren des zweiten Thermoplasten (D), vorzugsweise mittels einer Breitschlitzdüse, wodurch die zweite Thermoplastschicht (DS) erhalten wird;
(e) Aufbringen der zweiten Thermoplastschicht (DS) auf die der ersten Thermoplastschicht (BS) gegenüberliegende Seite der Glasgittergelege-Schicht (CS) des in Schritt (c) erhaltenen Verbundes; und
(f) Glätten des in Schritt (e) erhaltenen Verbundes, vorzugsweise mittels eines Glättwerks.

4. Verbundwerkstoff (V) nach einem der Ansprüche 1 bis 3, **dadurch gekennzeichnet, dass** der erste Thermoplast (B) wenigstens ein Polymer enthält oder aus einem Polymer besteht oder aus einem Gemisch aus mehreren Polymeren besteht, wobei das Polymer ausgewählt ist aus einer Gruppe, welche besteht aus: einem Polyolefin, insbesondere Polyethylen oder Polypropylen, einem Polyamid, einem thermoplastischen Olefin, einem thermoplastischen Elastomer, einem Polycarbonat, einem Polyacryl, einem Copolymer derselben, einer Thermoplast-Abmischung, und einem reaktiven Polymer, vorzugsweise einem ungesättigten Polyesterharz, einem Epoxidharz oder einem Polyurethan.

5. Verbundwerkstoff (V) nach einem der Ansprüche 3 bis 4, **dadurch gekennzeichnet, dass** der zweite Thermoplast (D) wenigstens ein Polymer enthält oder aus einem Polymer besteht oder aus einem Gemisch aus mehreren Polymeren besteht, wobei das Polymer ausgewählt ist aus einer Gruppe, welche besteht aus: einem Polyolefin, insbesondere Polyethylen oder Polypropylen, einem Polyamid, einem thermoplastischen Olefin, einem thermoplastischen Elastomer, einem Polycarbonat, einem Polyacryl, einem Copolymer derselben, einer Thermoplast-Abmischung, und einem reaktiven Polymer, vorzugsweise einem ungesättigten Polyesterharz, einem Epoxidharz oder einem Polyurethan.

6. Verbundwerkstoff (V) nach einem der Ansprüche 1 bis 5, **dadurch gekennzeichnet, dass** die erste Thermoplastschicht (BS) mittels Extrusion mit dem Glasgittergelege (C) verbindbar ist oder verbunden worden ist.

7. Verbundwerkstoff (V) nach einem der Ansprüche 1 bis 6, **dadurch gekennzeichnet, dass** der Verbundwerkstoff einen Glasanteil von 15 bis 35 Massenprozent, vorzugsweise von 20 bis 30 Massenprozent, insbesondere 23 bis 27 Massenprozent, aufweist.

8. Verbundwerkstoff (V) nach einem der Ansprüche 2 bis 7, **dadurch gekennzeichnet, dass** das Glasgittergelege (C) ein Glas und einen dritten Thermoplasten aufweist;
wobei der Glasanteil im Glasgittergelege (C) vorzugsweise 50 bis 70 Massenprozent, insbesondere 55 bis 65 Massenprozent, beträgt; und
wobei der Anteil des dritten Thermoplasten im Glasgittergelege (C) vorzugsweise 30 bis 50 Massenprozent, insbesondere 35 bis 45 Massenprozent, beträgt;
wobei der dritte Thermoplast vorzugsweise ein Polyolefin, insbesondere Polypropylen, ist;
wobei das Glasgittergelege (C) ferner vorzugsweise Polyester, Naturmaterialien, Aramid, Kohlenstoff, Basalt, Carbon, höherschmelzende Polymere und/oder Hybridfasern aufweist; und
wobei das Glasgittergelege (C) vorzugsweise mit einem Haftungsvermittler imprägniert oder ummantelt ist.

9. Verbundwerkstoff (V) nach einem der Ansprüche 1 bis 8, **dadurch gekennzeichnet, dass** das Glasgittergelege (C) eine Gitterstruktur aufweist;
wobei die Gitterstruktur vorzugsweise eine quadratische Gitterstruktur, bei welcher die Kantenlängen der Quadrate 1 bis 6 mm, vorzugsweise 2 bis 4 mm, insbesondere 2,5 bis 3,5 mm, betragen; und
wobei das Glasgittergelege (C) vorzugsweise ein- oder beidseitig mit einem Glasvlies (GV) kaschiert ist.

10. Verbundwerkstoff (V) nach einem der Ansprüche 1 bis 9, **dadurch gekennzeichnet, dass** der Verbundwerkstoff (V) eine PET-Vliesschicht (AS) aufweist;
wobei die PET-Vliesschicht (AS) aus einem PET-Vlies (A) besteht, welcher Polyethylenterephthalat enthält oder daraus besteht; und
wobei das PET-Vlies (A) vorzugsweise ein Flächengewicht von 20 bis 60 g/m², vorzugsweise von 30 bis 50 g/m², aufweist.

11. Verbundwerkstoff (V) nach Anspruch 10, **dadurch gekennzeichnet, dass** der Verbundwerkstoff (V) die nachfolgende Schichtenfolge aufweist:
die PET-Vliesschicht (AS);
die erste Thermoplastschicht (BS);
die Glasgittergelege-Schicht (CS); und
die zweite Thermoplastschicht (DS).

12. Verbundwerkstoff (V) nach einem der Ansprüche 1 bis 11, **dadurch gekennzeichnet, dass** der Verbundwerkstoff (V) eine Dekorschicht (ES) aufweist;
wobei die Dekorschicht (ES) vorzugsweise im Inline-Coating-Verfahren extrudiert wurde;
wobei die Dekorschicht (ES) aus einem Dekormaterial (E) besteht, welches einen vierten Thermoplasten enthält oder daraus besteht;
wobei der vierte Thermoplast vorzugsweise ein Polyolefin, insbesondere Polypropylen, ist; und
wobei die Dekorschicht (ES) vorzugsweise keine Glasfasern enthält.

13. Verbundwerkstoff (V) nach Anspruch 12, **dadurch gekennzeichnet, dass** der Verbundwerkstoff (V) die nachfolgende Schichtenfolge aufweist:
die PET-Vliesschicht (AS);
die erste Thermoplastschicht (BS);
die Glasgittergelege-Schicht (CS);
die zweite Thermoplastschicht (DS); und
die Dekorschicht (ES).

14. Verfahren zur Herstellung eines Verbundwerkstoffs (V), vorzugsweise eines Verbundwerkstoffs (V) nach einem der Ansprüche 1 bis 13, wenigstens mit den Schritten:
(a) Extrudieren eines ersten Thermoplasten (B), vorzugsweise mittels einer Breitschlitzdüse, wodurch eine erste Thermoplastschicht (BS) erhalten wird; und
(b) Glätten der in Schritt (a) erhaltenen ersten Thermoplastschicht (BS), vorzugsweise mittels eines Glättwerks;
wobei die erste Thermoplastschicht (BS) den ersten Thermoplasten (B) enthält oder daraus besteht;
wobei der erste Thermoplast (B) Glasfasern in einem Massenanteil zwischen 5 und 60 %, vorzugsweise zwischen 20 und 40 %, aufweist;
wobei wenigstens 60 Massen-%, vorzugsweise wenigstens 80 Massen-%, der Glasfasern des ersten Thermoplasten (B) eine Länge von 8 bis 10 mm aufweisen;
wobei der erste Thermoplast (B) einen Schmelzflussindex zwischen 2 und 10 g/min, gemessen bei 230 °C und 2,16 kg gemäß DIN 53735, aufweist; und wobei die Temperatur des ersten Thermoplasten (B) beim Extrudieren in Schritt (a) vorzugsweise auf eine Temperatur zwischen 220 und 230 °C eingestellt ist.

15. Verfahren zur Herstellung eines Verbundwerkstoffs (V), vorzugsweise eines Verbundwerkstoffs (V) nach einem der Ansprüche 1 bis 13, wenigstens mit den Schritten:
(a) Extrudieren eines ersten Thermoplasten (B), vorzugsweise mittels einer Breitschlitzdüse, wodurch eine erste Thermoplastschicht (BS) erhalten wird;
(b) Aufbringen der ersten Thermoplastschicht (BS) auf eine Glasgittergelege-Schicht (CS); und
(c) Glätten des in Schritt (b) erhaltenen Verbundes, vorzugsweise mittels eines Glättwerks;
wobei die erste Thermoplastschicht (BS) den ersten Thermoplasten (B) enthält oder daraus besteht;
wobei der erste Thermoplast (B) Glasfasern in einem Massenanteil zwischen 5 und 60 %, vorzugsweise zwischen 20 und 40 %, aufweist;
wobei wenigstens 60 Massen-%, vorzugsweise wenigstens 80 Massen-%, der Glasfasern des ersten Thermoplasten (B) eine Länge von 8 bis 10 mm aufweisen;
wobei der erste Thermoplast (B) einen Schmelzflussindex zwischen 2 und 10 g/min, gemessen bei 230 °C und 2,16 kg gemäß DIN 53735, aufweist;
wobei die Temperatur des ersten Thermoplasten (B) beim Extrudieren in Schritt (a) vorzugsweise auf eine Temperatur zwischen 220 und 230 °C eingestellt ist; und wobei die Glasgittergelege-Schicht (CS) ein Glasgittergelege (C) enthält oder daraus besteht.

16. Verfahren nach Anspruch 15, **dadurch gekennzeichnet, dass** es ferner wenigstens einen der nachfolgenden Schritte aufweist:
(d) Extrudieren eines zweiten Thermoplasten (D), vorzugsweise mittels einer Breitschlitzdüse, wodurch eine zweite Thermoplastschicht (DS) erhalten wird;
(e) Aufbringen der zweiten Thermoplastschicht (DS) auf die der ersten Thermoplastschicht (BS) gegenüberliegende Seite der Glasgittergelege-Schicht (CS) des in Schritt (c) erhaltenen Verbundes;
(f) Glätten des in Schritt (e) erhaltenen Verbundes, vorzugsweise mittels eines Glättwerks;
wobei die zweite Thermoplastschicht (DS) den zweiten Thermoplasten (D) enthält oder daraus besteht;
wobei der zweite Thermoplast (D) Glasfasern in einem Massenanteil zwischen 5 und 60 %, vorzugsweise zwischen 20 und 40 %, aufweist;
wobei wenigstens 60 Massen-%, vorzugsweise wenigstens 80 Massen-%, der Glasfasern des zweiten Thermoplasten (D) eine Länge von 8 bis 10 mm aufweisen; und
wobei der zweite Thermoplast (D) einen Schmelzflussindex zwischen 2 und 10 g/min, gemessen bei 230 °C und 2,16 kg gemäß DIN 53735, aufweist;

17. Verfahren nach Anspruch 16, **dadurch gekennzeichnet, dass** es ferner wenigstens einen der nachfolgenden Schritte aufweist:
(g) Laminieren einer Dekorschicht (ES) auf die zweite Thermoplastschicht (DS) des in Schritt (f) erhaltenen Verbundes; und
(h) vorzugsweise Glätten des in Schritt (g) erhaltenen Verbundes, vorzugsweise mittels eines Glättwerks;
wobei die Dekorschicht (ES) vorzugsweise im Inline-Coating-Verfahren extrudiert wurde;
wobei die Dekorschicht (ES) aus einem Dekormaterial (E) besteht, welches einen vierten Thermoplasten enthält oder daraus besteht;
wobei der vierte Thermoplast vorzugsweise ein Polyolefin, insbesondere Polypropylen, ist; und
wobei die Dekorschicht (ES) vorzugsweise keine Glasfasern enthält.

18. Verwendung eines glasfaserverstärkten Thermoplasten als ein Material für einen Verbundwerkstoff (V) zur Verbesserung der mechanischen Eigenschaften, vorzugsweise der Festigkeit, der Steifigkeit und/oder der geringen Wärmeausdehnung, des Verbundwerkstoffs (V);
wobei der glasfaserverstärkte Thermoplast Glasfasern in einem Massenanteil zwischen 5 und 60 %, vorzugsweise zwischen 20 und 40 %, aufweist;
wobei wenigstens 60 Massen-%, vorzugsweise wenigstens 80 Massen-%, der Glasfasern des glasfaserverstärkten Thermoplasten eine Länge von 8 bis 10 mm aufweisen;
wobei der glasfaserverstärkte Thermoplast ein thermoplastisches Polymer mit einen Schmelzflussindex zwischen 2 und 10 g/min, gemessen bei 230 °C und 2,16 kg gemäß DIN 53735, aufweist; und
wobei der Verbundwerkstoff (V) vorzugsweise durch ein Verfahren hergestellt wird, welches wenigstens die nachfolgenden Schritte umfasst:
(a) Extrudieren des glasfaserverstärkten Thermoplasten, vorzugsweise mittels einer Breitschlitzdüse; und
(b) Glätten des glasfaserverstärkten Thermoplasten, vorzugsweise mittels eines Glättwerks.

19. Verwendung eines Glasgittergeleges (C) zur Herstellung eines Verbundwerkstoffs (V), wobei das Glasgittergelege (C) mit einer Schmelzebahn eines Thermoplasten (B) extrudiert wird, um die Maß- und Zugfestigkeit und/oder die Stabilität des Verbundwerkstoffs bezüglich der mechanischen Stabilität und/oder der Temperaturstabilität zu verbessern;
wobei der Verbundwerkstoff nach der Extrusion vorzugsweise mittels eines Glättwerks behandelt wird.
